# EUROPEAN PATENT APPLICATION

(11) **EP 2 635 021 A2**
(43) Date of publication of application: **04.09.2013**
(21) Application number: 13154788.7
(22) Date of filing: 11.02.2013
(51) Int. Cl.: H04N 5/272, H04N 5/445, H04N 21/47

(54) **Method and apparatus for adding auxiliary visual objects to an image or an image sequence**

(30) Priority: 29.02.2012 EP 12305243; 14.05.2012 EP 12305536
(71) Applicant: Thomson Licensing, 92130 Issy-les-Moulineaux (FR)
(72) Inventor: Winter, Marco, 30659 Hannover (DE); Putzke-Roeming, Wolfram, 31137 Hildesheim (DE); Jachalsky, Joern, 30974 Wennigsen (DE)
(74) Representative: Schmidt-Uhlig, Thomas

(57) **Abstract**

A method and an apparatus for adding an auxiliary visual object (2, 3, 4, 5, 6, 7, 9) to an image (1) or a sequence of images are described. Metadata, which comprises at least information about the three-dimensional structure of a scene depicted in the image (1) or the sequence of images, and which is provided together with the image (1) or the sequence of images, is retrieved upon a user request to add an auxiliary visual object (2, 3, 4, 5, 6, 7, 9). A position for an auxiliary visual object (2, 3, 4, 5, 6, 7, 9) in the image (1) or the sequence of images is determined from the retrieved metadata. The auxiliary visual object (2, 3, 4, 5, 6, 7, 9) is then added to the image (1) or the sequence of images in accordance with the determined position.

## Description

The present invention is related to a solution for providing images or image sequences with auxiliary visual objects. More specifically, the invention is related to a solution for adding aid lines or other helpful visual objects to an image or a video scene, especially a sports scene.

It is a trend in many kinds of sports to analyze situations in more detail. For example, in soccer games very often offside decisions are questioned, or it is discussed whether the ball really was behind the goal line. However, for some video scenes aid lines or other helpful information would be highly appreciated in order to be able to come to a sound conclusion. Sometimes such aid lines are provided by the broadcaster, but not always. The user has no control about such a service.

In this regard US 2010/0050082 a method for inserting a visual object, e.g. an image, video, graphics, text, or advertisement, in a video. For this purpose a video analysis module analyses the video to retrieve point of interest locations, based on which insertion locations are determined. The visual object is then inserted in accordance with the determined insertion location. Depending on the type of visual object to be inserted, a high performance computer is required at the user side.

It is an object of the present invention to propose a simplified solution for adding auxiliary visual objects to an image or a sequence of images, which can at least be partially controlled by a user.

According to the invention, this object is achieved by a method for adding an auxiliary visual object to an image or a sequence of images, which comprises the steps of:
- receiving a broadcast of the image or the sequence of images;
- retrieving metadata provided together with the image or the sequence of images, wherein the metadata comprises at least information about the three-dimensional structure of a scene depicted in the image or the sequence of images;
- receiving a user request of display an auxiliary visual object;
- determining a position for the auxiliary visual object in the image or the sequence of images from the retrieved metadata; and
- adding the auxiliary visual object to the image or the sequence of images in accordance with the determined position.

Likewise, an apparatus for playback of an image or a sequence of images is adapted to perform a method as described above for adding an auxiliary visual object to the image or the sequence of images.

According to the invention additional metadata, e.g. 3D-related metadata, is transmitted together with the video data. Based on this information the receiver is able to add aid lines and other auxiliary visual objects to the video by demand of the user. The additional metadata preferably include information about the relative position of the recording camera and the recorded scene, e.g. the court, or more generally depth or disparity information. Advantageously, in case of sports scenes the location of the ball and/or the players relative to the camera are provided. Furthermore, geometrical camera calibration is favorably made available in order to be able to remove optical distortions. In case the additional metadata also comprise more detailed depth or disparity information for the scene, it is even possible to occlude parts of the lines or the other auxiliary visual objects due to other objects in the scene, e.g. players. Alternatively, the auxiliary visual objects may simply be semi-transparent. This simplifies the implementation.

With the auxiliary visual objects the user may check independently of the broadcaster whether a sports scene was correctly managed by the referee, for example. As sports fans often spent large amounts of time to discuss critical situations, they will appreciate to be able to analyze such scenes at home like professionals. The solution according to the invention thus brings interactivity to the consumer where it is already demanded.

The combination of the images of the scene and the additional 3D-related metadata allows to create a mixture of real scenes and virtual scenes. With sufficient 3D-related metadata even a virtual "helicopter flight" around the scene is possible. Unfortunately, there is usually not enough information available for the occluded parts of the scene. However, the location of the players, the ball and the simple plane field is available. This is sufficient for an animated flight through a CGI scene (CGI: Computer-Generated Imagery). The set top box draws the players as objects and calculates a flight around this completely animated scene. This is sufficient to get an idea about the 3D scene. Of course, the broadcaster may deliver further 3D-related information derived from other cameras. In this case a more detailed 3D modeling may be done by the set top box, up to perfect animations.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: shows a scene of a soccer game as captured by the camera;
- Fig. 2: shows the scene of Fig. 1 with two additional aid lines;
- Fig. 3: shows the scene of Fig. 1 with a semi-transparent aid line and a circular arc;
- Fig. 4: shows the scene of Fig. 1 with ball trajectories;
- Fig. 5: shows the scene of Fig. 1 with anticipated ball trajectories and aid circles;
- Fig. 6: depicts a shot from a computer game with a virtual ball shadow;
- Fig. 7: shows a scene from a real soccer game without any ball shadow;
- Fig. 8: depicts the scene of Fig. 7 with a semi-transparent shadow;
- Fig. 9: shows the scene of Fig. 7 with a fully black shadow;
- Fig. 10: depicts another scene from a soccer game with a partly occluded virtual ball shadow; and
- Fig. 11: shows the scene of Fig. 10 with a semi-transparent virtual shadow.

In the following the invention is described with reference to a soccer game. Of course, the general idea is applicable to other kinds of sports as well, e.g. golf, American football, rugby etc. Also, it is not necessarily limited to sports, it may also be used for other areas where visual hints would be appreciated by the viewer, e.g.to highlight animals in documentaries.

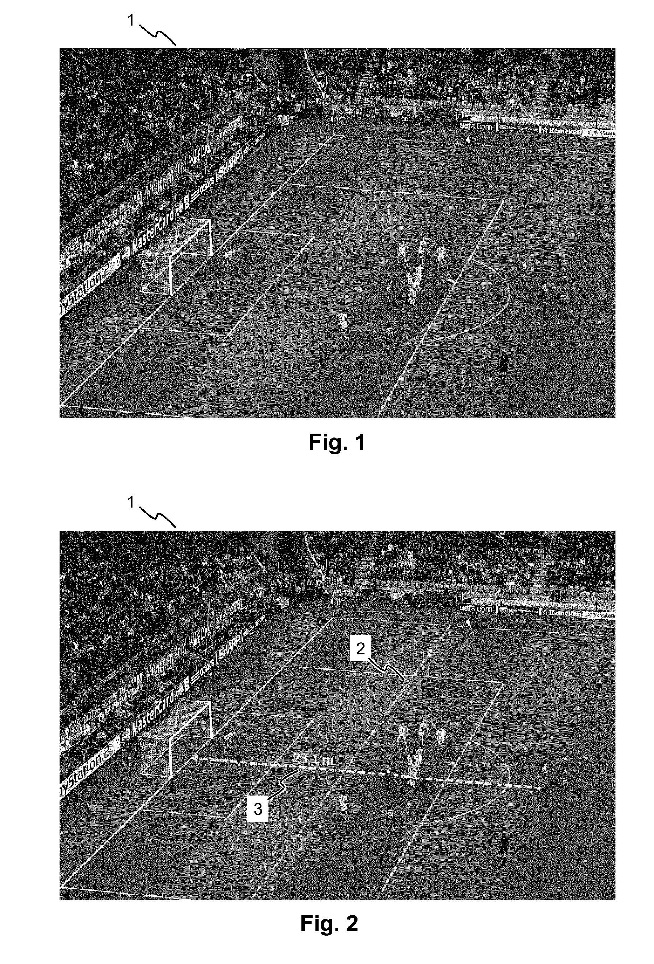

Fig. 1 shows a scene 1 from a soccer game as captured by the camera. The picture 1 constitutes the basic picture for the exemplary auxiliary visual objects illustrated in Figs. 2 to 5. According to the invention, the scene is broadcast in a format which allows to mix real scenes and virtual scenes. For this purpose additional metadata about the real scene is provided, e.g. generated by the broadcaster during recording of the scene. The additional metadata contains information about the location of the camera relative to the recorded scene, e.g. the soccer field. Based on the broadcast scene and the additional information the set top box of the user has is able to add virtual aid lines or other visual objects to the scene. In case also depth or disparity information is available, it is even possible to occlude parts of the lines due to objects between the camera and the virtual line, e.g. players.

Fig. 2 shows the scene of Fig. 1 with two added aid lines. The first aid line 2 is introduced to identify an offside position. The second aid line 3 illustrates the direct distance from shot to goal, in this case 23.1m. In the example of Fig. 2, the players occlude parts of the lines 2, 3. This is achieved with an analysis of the disparity information associated to the picture.

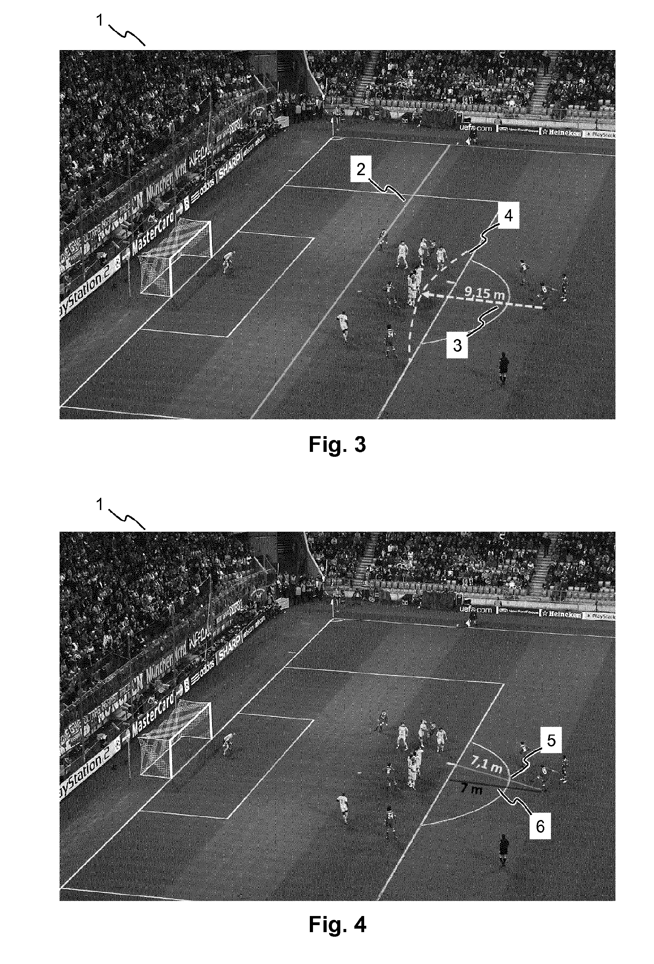

Fig. 3 shows the scene of Fig. 1 with another aid line 2 to identify an offside position. This add line 2 is semi-transparent, which simplifies the implementation. Furthermore, a single distance is shown with a second aid line 3 and a circular arc 4, in this case 9.15m.

Fig. 4 shows the scene of Fig. 1 with a trajectory 5 of the flying ball. Based on the metadata a distance is indicated, in this case 7.1m. Instead of or in addition to the trajectory 5 of the flying ball also a trajectory 6 of the virtual ball shadow and the corresponding distance may be shown, here 7m. For the trajectory 6 of the virtual ball shadow noon sun at the equator is assumed.

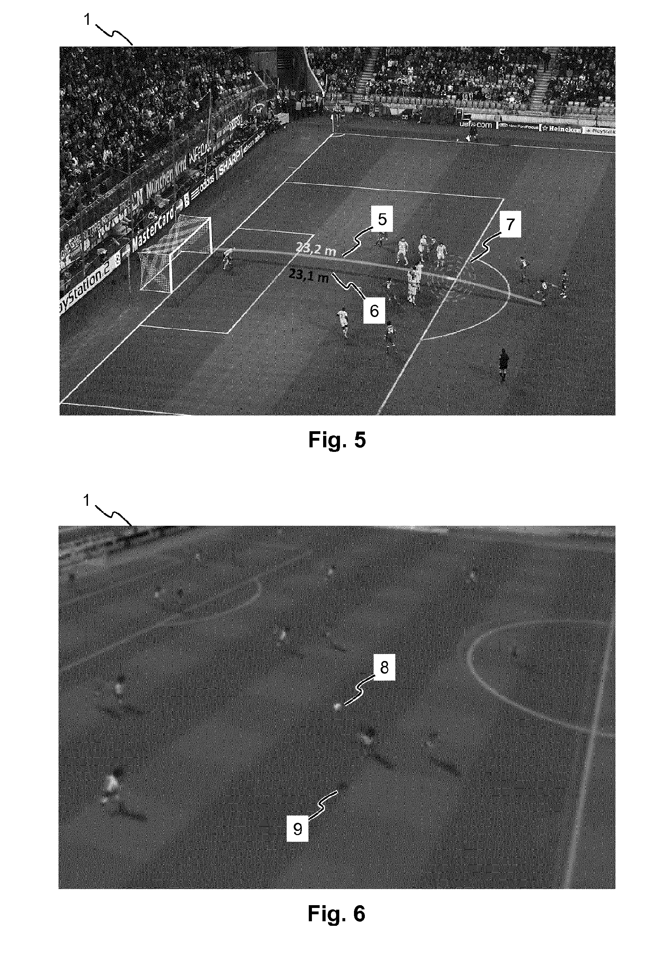

Fig. 5 shows the scene of Fig. 1 with the trajectories 5, 6 of the whole scene, i.e. it contains a look into the future. This is only possible for a paused scene, i.e. a known future, as it is extremely demanding to calculate such anticipating trajectories 5, 6 in real-time. Again, both the trajectory 5 of the flying ball and the trajectory 6 of the virtual shadow are shown, both with the corresponding distances of 23.2m and 23.1m, respectively. In addition, the location of the ball is indicated by aid circles 7.

Fig. 6 depicts a shot of a computer game with a virtual shadow 9 of the ball 8. The shadow 9 is used to improve the perception of the ball 8. For the virtual ball shadow noon sun at the equator is assumed.

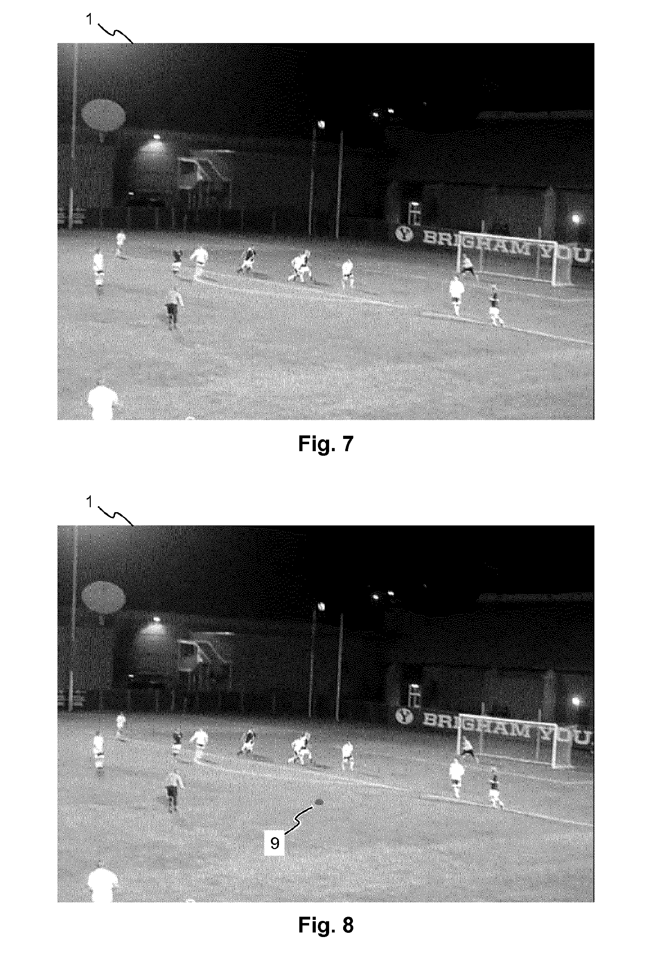

In comparison, Fig. 7 shows a scene from a real soccer game without any ball shadow. As can be seen it is not possible to determine the location of the ball.

The additional metadata about the real scene, especially the depth or disparity information, is preferably used to determine object trajectories and to calculate the position of a virtual shadow and to place it correctly into the scene. This is schematically illustrated in Figs. 8 to 12.

Fig. 8 depicts the scene of Fig. 7 with a semi-transparent shadow 9 from a virtual sun, for which once more noon sun at the equator is assumed.

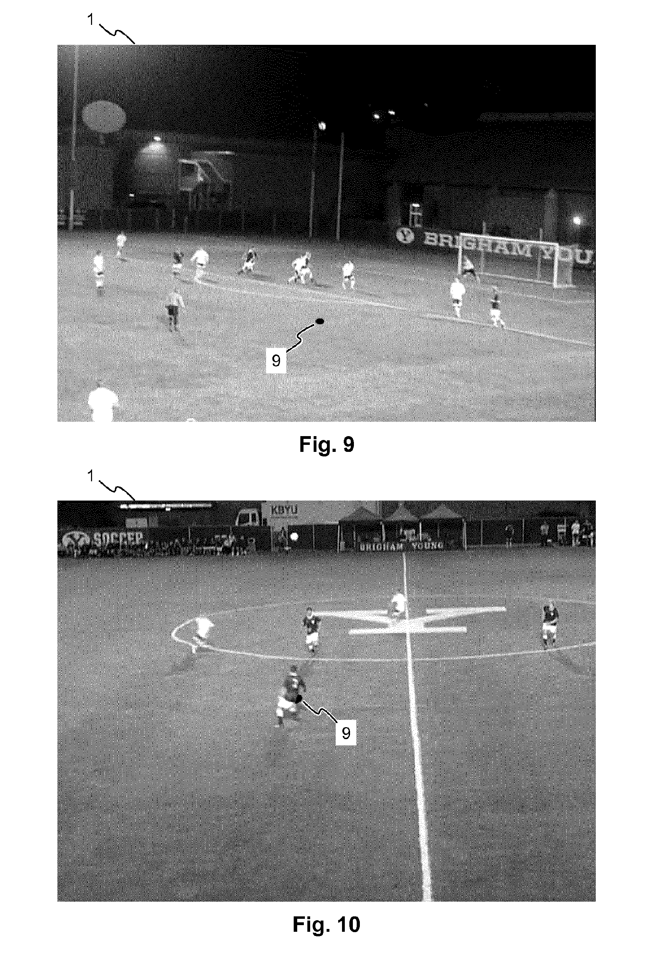

Similarly, Fig. 9 shows the scene of Fig. 7 with a completely black shadow from a virtual sun.

Fig. 10 shows another scene 1 from a soccer game with a fully black virtual ball shadow 9 from a virtual sun. In this case, however, the virtual ball shadow 9 is partly occluded by the body of a player. A correct concealment of the shadow 9 is done if other objects, e.g. players, would occlude a real shadow, i.e. are located between the virtual shadow and the camera. This feature makes use of the available depth or disparity information and may preferably be switched on and off by the user. For this purpose the calculation of the shadow 9 needs to be performed on the consumer side, i.e. in a set top box or TV set with the necessary capabilities. The received stream contains all appropriate data to calculate and project the artificial shadow.

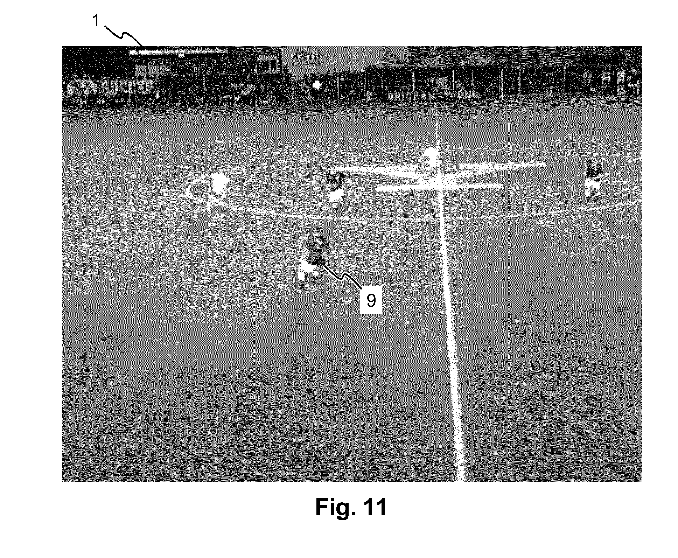

Finally, Fig. 11 shows the scene of Fig. 10 with a semi-transparent virtual shadow 9 of a real ball from a virtual sun. In contrast to Fig. 10 there are no occluded parts of the shadow 9.

In general the shadow of the ball does not need to be available the whole time. For example, the ball shadow may be added in dependence of the altitude the ball. According to one possibility, the transparency of the virtual ball shadow decreases with increasing altitude of the ball. Alternatively, the virtual ball shadow is only displayed for balls at an altitude that is higher than a specified level, e.g. 1m. This avoids unnecessary or even disturbing shadows during specific scenes, e.g. during dribbling. When the above approaches or another suitable approach is used, the virtual ball shadow may be active during a complete live soccer match without annoying shadows for situations where the location of the ball is readily apparent.

The transmitted additional data are likewise suitable for other visual hints. For example, a light tail following the player or following several players in parallel can be added to the scene. Also certain areas of the field may be highlighted or players may even be moved with appropriate occlusion handling by the set top box, both within the real scenes or in artificial scenes generated from the available data. This would greatly enhance the possibilities of game analysis.

## Claims

1. A method for adding an auxiliary visual object (2, 3, 4, 5, 6, 7, 9) to an image (1) or a sequence of images, the method **comprising** the steps of:
- receiving a broadcast of the image (1) or the sequence of images;
- retrieving metadata provided together with the image (1) or the sequence of images, wherein the metadata comprises at least information about the three-dimensional structure of a scene depicted in the image (1) or the sequence of images;
- receiving a user request of display an auxiliary visual object (2, 3, 4, 5, 6, 7, 9);
- determining a position for the auxiliary visual object (2, 3, 4, 5, 6, 7, 9) in the image (1) or the sequence of images from the retrieved metadata; and
- adding the auxiliary visual object (2, 3, 4, 5, 6, 7, 9) to the image (1) or the sequence of images in accordance with the determined position.

2. The method according to claim 1, **wherein** the auxiliary visual object (2, 3, 4, 5, 6, 7, 9) is a solid or a semi-transparent line (2, 3, 4, 5, 6).

3. The method according to claim 2, **wherein** the solid or the semi-transparent line (2, 3, 4, 5, 6) is a trajectory (5) of an object (8) or a trajectory (6) of a shadow of an object (8).

4. The method according to claim 1, **wherein** the auxiliary visual object (2, 3, 4, 5, 6, 7, 9) is an identifier (7) for an object (8).

5. The method according to claim 1, **wherein** the auxiliary visual object (2, 3, 4, 5, 6, 7, 9) is a virtual shadow (9) of an object (8).

6. The method according to claim 5, **wherein** a presentation of the virtual shadow (9) is dependent on an altitude of the object (8).

7. The method according to claim 1, **wherein** the auxiliary visual object (2, 3, 4, 5, 6, 7, 9) indicates a distance between two objects.

8. The method according to one of the preceding claims, **wherein** the information about the three-dimensional structure of the scene depicted in the image (1) or the sequence of images is depth or disparity information.

9. An apparatus for playback of an image (1) or a sequence of images, **characterized in that** the apparatus (10) is adapted to perform a method according to one of claims 1 to 8 for adding an auxiliary visual object (2, 3, 4, 5, 6, 7, 9) to the image (1) or the sequence of images.
